# EUROPÄISCHE PATENTANMELDUNG

(11) **EP 4 838 201 A1**
(43) Veröffentlichungstag der Anmeldung: **11.11.2026**
(21) Anmeldenummer: 26176735.4
(22) Anmeldetag: 05.05.2026
(51) Int. Cl.: G01N 11/04

(54) **PRÜFKAMMERANORDNUNG UND KAPILLAR-RHEOMETER MIT EINER PRÜFKAMMERANORDNUNG**

(30) Priorität: 06.05.2025 DE 102025117322
(71) Anmelder: Netzsch-Gerätebau GmbH, 95100 Selb (DE)
(72) Erfinder: Küspert, Dr., Sabrina, 95100 Selb (DE); Taubmann, Dr., Rebekka, 95100 Selb (DE); Dunkel, Johannes, 95111 Rehau (DE); Szàntò, Levente, 95028 Hof (DE); Özgül, Onur, 90480 Nürnberg (DE); Müller, Christian, 95186 Höchstädt im Fichtelgebirge (DE); Reul, Maximilian, 95168 Marktleuthen (DE); Rummel, Florian, 95100 Selb (DE)
(74) Vertreter: Isarpatent

(57) **Zusammenfassung**

Die vorliegende Erfindung schafft eine Prüfkammeranordnung, insbesondere in einem Kapillar-Rheometer, umfassend: eine mit einer Prüfmasse befüllbare, insbesondere beheizbare Prüfkammer mit einem Prüfkammerboden; einen in der Prüfkammer linear verschiebbar angeordneten Stempel mit einer Stempelstange und einer mit einem ersten Ende der Stempelstange verbundenen, die Prüfmasse druckbeaufschlagenden, einen Stempelgrund aufweisenden Stempelspitze; eine ein zweites Ende der Stempelstange aufnehmende Verschiebeeinrichtung für eine Verschiebung des Stempels in der Prüfkammer in Richtung des Prüfkammerbodens; und eine in der Verschiebanordnung angeordnete, von dem Stempel entkoppelte mit der Verschiebeanordnung verschiebbare berührungslose Distanzmessvorrichtung zur Erfassung einer Stempeldehnung, wobei in der Stempelstange eine sich in Richtung einer Längsachse der Stempelstange zwischen dem Stempelgrund und dem zweiten Ende erstreckende Bohrung eingebracht ist und wobei am Stempelgrund eine der berührungslosen Distanzmessvorrichtung zugewandte Reflektionsfläche für ein von der berührungslosen Distanzmessvorrichtung durch die Stempelstange ausgesendetes Messignal vorgesehen ist und die berührungslose Distanzmessvorrichtung einen relativ zur Reflektionsfläche beanstandet angeordneten Sensor zur berührungslosen Erfassung des von der Reflektionsfläche zum Sensor reflektierten Messignals (MS) aufweist sowie ein Kapillar-Rheometer mit einer solchen Prüfkammeranordnung.

## Beschreibung

Die vorliegende Erfindung betrifft eine Prüfkammeranordnung, insbesondere in einem Kapillar-Rheometer sowie ein Kapillar-Rheometer mit einer solchen Prüfkammeranordnung.

Kapillar-Rheometer werden zur Untersuchung des Fließverhaltens und der rheologischen Eigenschaften viskoser und plastischer Materialien, beispielsweise von Polymeren und hochviskosen Fluidsystemen, eingesetzt. Das zu untersuchende Material wird unter definiertem Druck und bei in der Regel konstanter Temperatur durch eine Prüfkammer geführt und kann anschließend aus einer Düse extrudiert werden. Während des Durchflusses durch die Prüfkammer werden Messungen des Drucks am Eingang der Kapillare sowie der resultierenden Fließgeschwindigkeit des Materials durchgeführt. Durch die Variation des Drucks und die Messung der zugehörigen Volumen- oder Massenflussrate können Scherrate und Schubspannung des Materials bestimmt werden. Aus der Beziehung zwischen Schubspannung und Scherrate können Daten zur Viskosität abgeleitet und bei unterschiedlichen Schergeschwindigkeiten analysiert werden. Es kann so das Fließverhalten des Prüfmaterials unter realitätsnahen Prozessbedingungen abgebildet und eine rheologische Charakterisierung von Polymerschmelzen und pastösen Systemen durchgeführt werden. Die ermittelten Daten zur Temperatur- und Scherratenabhängigkeit der Viskosität dienen als Grundlage für die Prozessgestaltung, wie beispielsweise beim Spritzgießen und/oder der Extrusion von Kunststoffen.

Kapillar-Rheometer mit entsprechend ausgebildeten Prüfkammern ermöglichen eine pVT-Messung durch Bestimmung des Volumens zwischen einer Düse und der Spitze eines Stempels, der verwendet wird, um das Prüfmaterial druckbeaufschlagt durch die Prüfkammer zu führen und aus der Düse zu extrudieren. Der Stempel wie auch die Prüfkammer erfahren aufgrund hoher Prozesstemperaturen von bis zu 500°C und hohen herrschenden Drücken sowohl thermische als auch mechanische Dehnungen, die das Messergebnis verfälschen und in den Messergebnissen kompensiert werden müssen. Eine Methode zur Messung der Dehnung ist das Verwenden von Dehnmessstreifen. Diese weisen jedoch bezüglich des Temperaturbereiches eine nur bedingte Einsetzbarkeit auf. Weiterhin erfolgt die Aufheizung des Stempels und damit dessen temperaturbedingte Dehnung nicht gleichmäßig, sodass die Dehnungsmessung mit hohem konstruktivem Aufwand durch an mehreren Positionen angebrachte Dehnmessstreifen erfolgen müsste. Eine alternative, rein rechnerische Kompensation der Stempel- und Prüfkammerdehnung kann nur mit hohem Aufwand durchgeführt werden, da der Aufheizvorgang sowohl instationär als auch inhomogen, d.h. zeit- und ortsabhängig, erfolgt. Angesichts des in der Regel breiten Temperatur- und Druckbereichs bei der rheologischen Messung, ergibt sich daher ein mehrdimensionales Abhängigkeitssystem/-matrix, welches hinreichend nur mit sehr hohem rechnerischem Aufwand zu bestimmen wäre. Des Weiteren wäre eine komplett neue Berechnung erforderlich, falls konstruktive Änderungen vorgenommen werden (z. B. Änderungen der Abmessungen, des Materials, der Geometrien des Stempels und/oder der Prüfkammer). Hinzu kommt, dass die rechnerische Kompensation weitaus weniger genau ist, was zum Teil auch an der Vielzahl der Fügestellen der einzelnen Komponenten im betrachteten Bereich der Prüfkammeranordnung liegt. Der Wärmeübergang an diesen Stellen, der sogenannte Fugenleitwert oder auch Kontaktwiderstand, ist nur schwer rechnerisch zu bestimmen und bedarf einer experimentellen Überprüfung. Der Fugenleitwert hat jedoch einen großen Einfluss auf den Wärmefluss in Baugruppen und damit auch auf die Temperatur darin, was sich unmittelbar auf die Wärmeausdehnung auswirkt. Andererseits ist sowohl der örtliche Wärmeeintrag inhomogen, als auch der Aufheizprozess instationär, was bedeutet, dass auch weite Teile der Anschlusskonstruktion bei ausschließlich rechnerischer Dehnungskompensation mitsimuliert werden müssten. Dies macht den Aufbau der Simulation sehr komplex, gemeinsam mit dem instationären Charakter ergeben sich lange Berechnungszeiten. Neben den thermischen Einflüssen kommen auch noch mechanische hinzu, so ist beispielsweise der E-Modul temperaturabhängig, was einen Einfluss auf die Verkürzung des Stempels in Folge der Spindelkraft hat. Diese Faktoren müssten bei rechnerischer Kompensation ebenfalls berücksichtigt werden, um mit theoretischen Methoden ein verwertbares Ergebnis zu erzielen.

Es ist daher Aufgabe der vorliegenden Erfindung, Möglichkeiten zur kostengünstigeren, einfacheren und genaueren Durchführung einer Dehnungskompensation in einer Prüfkammer eines Kapillar-Rheometers zu schaffen.

Erfindungsgemäß wird diese Aufgabe jeweils durch die Gegenstände der unabhängigen Ansprüche gelöst.

Gemäß einem ersten Aspekt der Erfindung ist eine Prüfkammeranordnung insbesondere in einem Kapillar-Rheometer vorgesehen. Die Prüfkammeranordnung umfasst dabei eine mit einer Prüfmasse befüllbare, insbesondere beheizbare Prüfkammer mit einem Prüfkammerboden, einem in der Prüfkammer linear verschiebbar angeordneten Stempel mit einer Stempelstange und einer mit einem ersten Ende der Stempelstange verbundenen, die Prüfmasse druckbeaufschlagenden, einen Stempelgrund aufweisenden Stempelspitze und einer ein zweites Ende der Stempelstange aufnehmenden Verschiebeeinrichtung für eine Verschiebung des Stempels in der Prüfkammer in Richtung des Prüfkammerbodens und eine in der Verschiebanordnung angeordnete, von dem Stempel entkoppelte, mit der Verschiebeanordnung verschiebbare, berührungslose Distanzmessvorrichtung zur Erfassung einer Stempeldehnung, wobei in der Stempelstange eine sich in Richtung einer Längsachse der Stempelstange zwischen einem Stempelgrund und dem zweiten Ende erstreckende Bohrung eingebracht ist und wobei am Stempelgrund eine der berührungslosen Distanzmessvorrichtung zugewandte Reflektionsfläche für ein von der berührungslosen Distanzmessvorrichtung durch die Stempelstange ausgesendetes Messignal angeordnet ist und die berührungslose Distanzmessvorrichtung einen relativ zur Reflektionsfläche beanstandet angeordneten Sensor zur berührungslosen Erfassung des von der Reflektionsfläche zum Sensor reflektierten Messignals aufweist.

Gemäß einem zweiten Aspekt der Erfindung ist ein Kapillar-Rheometer vorgesehen, das mit wenigstens einer solchen Prüfkammeranordnung ausgestattet ist.

Eine der vorliegenden Erfindung zugrunde liegende Idee besteht darin, Dehnungen der Stempelspitze und der Prüfkammer messtechnisch zu erfassen, sodass diese in den gewonnen Messdaten der Prüfmasse rechnerisch kompensiert werden können. Vorteilhaft wird damit die Bestimmung der Position der Stempelspitze bei Druck- und Temperaturbedingungen , die von den Ausgangsbedingungen abweichen, erreicht. So kann die relative Positionsänderung des Kontaktpunktes zwischen Stempel und Prüfmasse ohne Einflüsse des Übertragungselements, d.h. der Verschiebeeinrichtung oder der umgebenden Prüfkammer, wie beispielsweise Kompression des Stempelmaterials durch Druck, geometrische Einflüsse durch z. B. Biegung oder Längenänderung durch Temperaturgradienten usw. erfasst werden. Die berührungslose Distanzmessvorrichtung zur Erfassung der Position der Stempelspitze ist dazu außerhalb der Prüfkammer angeordnete und wird somit nicht durch die dortigen Temperaturbedingungen beeinflusst. Die Erfindung ermöglicht eine Dehnungskompensation durch konstruktive Anordnung einer von der Verschiebeinrichtung entkoppelten Distanzmessvorrichtung die durch die Stempelstange misst, wobei die temperatur- oder druckbedingte Positionsänderung des Stempelgrundes aufgrund einer Dehnung der Stempelspitze bzw. des Stempelgrundes mittels Auswertung eines in Richtung des Stempelgrundes ausgesendeten und von dort zum Sensor reflektierten Messignals erfasst wird. Anhand der Modulation des reflektierten Signals kann eine dehnungsbasierte Positionsänderung der Stempelspitze bzw. des Stempelgrundes bestimmt und quantifiziert werden. Die Modulation des reflektierten Signals durch die Dehnung der Stempelspitze aufgrund der Temperatur- und Druckverhältnisse kann dabei in ein Wegsignal einer Abstandsänderung zwischen der Stempelspitze und der Distanzmessvorrichtung umgerechnet und die tatsächliche Dehnung der Stempelspitze messtechnisch ermittelt werden. Die erfasste Dehnung kann dann mit den Informationen eines Wegmesssystems der Verschiebeeinrichtung verrechnet und die Messgenauigkeit im Kapillar-Rheometer insgesamt erhöht werden. Die Methode der Längenkompensation durch Messung bietet Vorteile gegenüber einer rechnerischen Kompensation. Mit der Längenkompensation durch Messung werden die Längenänderungen direkt und in Echtzeit erfasst, unabhängig davon, ob die Dehnung thermisch oder mechanisch bedingt ist. Ein weiterer Vorteil ist, dass Messungen unabhängig von geometrischen Änderungen der Konstruktion oder der Werkstoffauswahl sind und bei Änderungen am Geräte- oder Komponentenaufbau des mit der erfindungsgemäßen Prüfkammeranordnung ausgestatteten Kapillar-Rheometers daher keine Berechnungsparameter angepasst werden müssen. Selbstverständlich können auch zwei und mehr der erfindungsgemäßen bau- und funktionsgleichen Prüfkammeranordnungen in einem Messgerät, insbesondere Kapillar-Rheometer angeordnet werden, um simultane Messungen durchzuführen und/oder den Probendurchsatz des Gerätes zu erhöhen.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der Prüfkammeranordnung weist der Sensor eine Messauflösung von zwischen 0,001 mm und 0,008 mm, bevorzugt von 0,005 mm auf. Durch die hohe Messauflösung des Sensors von 0,001 mm bis 0,008 mm, bevorzugt bei 0,005 mm, wird die detaillierte Erfassung selbst kleinster Verformungen und Dehnungen des Messkörpers ermöglicht. Dies hat den Vorteil, dass die Position der Stempelspitze über den Stempelgrund bei Verformungen durch Druck, Temperatur oder mechanische Einwirkungen präzise bestimmt und bei der Bewertung der Messergebnisse zuverlässig kompensiert werden können, um eine höhere Messgenauigkeit in der rheologischen Messung zu erzielen. Die exakte Erfassung und Kompensation der Dehnung ist insbesondere in Hochdruck- und Hochtemperaturumgebungen in Kapillar-Rheometern von Bedeutung. Durch die erfindungsgemäße Prüfkammeranordnung wird somit insgesamt die Messgenauigkeit auf konstruktiv einfache Art und Weise erhöht und die Reproduzierbarkeit der Messungen verbessert.

Gemäß einer Weiterbildung ist in der erfindungsgemäßen Prüfkammeranordnung der Sensor als Laser-Distanzsensor, Radar-Distanzsensor, Mikrowellen-Distanzsensor, LiDAR-Distanzsensor, Ultraschall-Distanzsensor oder Kombination daraus ausgebildet. Die vorgenannten berührungslosen Distanzsensoren wie Laser-, Radar-, LiDAR- und Ultraschalldistanzsensoren messen die dehnungsbedingten Abstandsänderung zwischen Stempelgrund und Sensor nach einem Laufzeit- oder Phasenverschiebungsprinzip. Die Abstandsänderung wird durch die Erfassung der Reflexion des ausgesendeten Signals an der Reflektionsfläche am Stempelgrund. Dabei sendet der Sensor ein Signal (Licht/Laser-, Radar/Mikrowellen- oder Ultraschallsignal) aus, das sich mit einer konstanten Geschwindigkeit bewegt und von der Reflektionsfläche im Stempelgrund zurück zum Sensor reflektiert wird. Der Sensor misst die Laufzeit des gesendeten und reflektierten Signals zwischen Stempelgrund und Sensor. Aus der Laufzeit und der bekannten Ausbreitungsgeschwindigkeit des Signals wird die Entfernung zur Reflektionsfläche berechnet. Eine Veränderung des Abstandes zwischen Sensor und Stempelgrund und damit der Stempelspitze aufgrund temperatur- oder druckbedingter Dehnung während der rheologischen Messung führt zu einer Änderung der Laufzeit, die der Sensor erfasst und in eine Distanzänderung umrechnet. Der Stempelgrund oder ein dort angeordnetes Reflektionsmittel dient hierbei als Reflektionsfläche für das Signal. Alternativ kann eine Messung der Abstandsänderung durch Phasenverschiebung des ausgesendeten Sensorsignals erfolgen. In diesem Fall sendet der Sensor ein kontinuierliches Signal mit einer definierten Frequenz aus. Das reflektierte Signal wird mit einer Phasenverschiebung zum Sensor reflektiert. Aus der Phasenverschiebung des reflektierten Signals kann ein Wert für die Abstandsänderung zwischen Stempelgrund und Sensor abgeleitet werden. Eine Dehnung der Stempelspitze und damit des Stempelgrundes ändert die Phasenverschiebung proportional zur Abstandsänderung, die über den Sensor präzise erfasst wird kann dann zur Dehnungskompensation in der Auswertung der rheologischen Messung verwendet werden. Gemäß der Erfindung wird die mit dem jeweiligen Distanzsensor oder den Distanzsensoren ausgestattete Distanzmessvorrichtung zentral im Bereich der offenen, in Richtung der Längsachse der Stempelstange zwischen Distanzmessvorrichtung und Stempelgrund verlaufenden Bohrung der Stempelstange, jedoch von dieser entkoppelt angeordnet. Das Sensorsignal wird durch die Stempelstange in Richtung des Stempelgrundes gesendet und von dem am Ende der Stempelstange befindlichen Stempelgrund bzw. der dort vorgesehenen Reflektionsfläche oder dem Reflektionsmittel durch die Bohrung zum Sensor reflektiert. Ultraschallsensoren könnten ebenfalls eingesetzt werden, da sie das geschlossene Ende des Rohres als Reflektor nutzen können. Der Sensor misst die Laufzeit des Schalls, um die Distanzänderung zu berechnen.

Die Distanzmessvorrichtung in der erfindungsgemäßen Prüfkammeranordnung ermöglicht vorteilhaft eine berührungslose und äußerst präzise Erfassung der Abstandsänderungen zwischen Sensor und Stempelspitze. Die beschriebenen Sensoren zeichnen sich zudem bei dynamischen Prozessen, wie in rheologischen Messungen durch eine schnelle Reaktionszeit aus. Dadurch können schnelle Distanzänderungen durch druck- oder temperaturbedingte Dehnung des Stempels bzw. der Stempelspitze ohne Verzögerung erfasst werden, wodurch vorteilhaft die Echtzeit-Analyse der Materialeigenschaften der Prüfmasse verbessert wird. Die unmittelbare Signalverarbeitung durch die Sensor, vereinfacht die elektronische Auswertung und Weiterverarbeitung der Messdaten. So können die erfassten Distanzänderungen direkt in die Datenanalyse zur Dehnungskompensation eingebunden werden.

Gemäß einer Weiterbildung ist wenigstens ein Teilbereich der dem Sensor zugewandten Oberfläche des Stempelgrundes als Reflektionsfläche ausgebildet. Die Reflektionsfläche kann dabei bevorzugt als Spiegel oder Prisma ausgebildet werden oder eine Oberflächenstrukturierung aufweisen. Wird zusätzlich oder alternativ ein gesondertes, mit dem Stempelgrund verbundenes Reflektionsmittel verwendet, so wird dieses bevorzugt als Spiegel oder Prisma ausgebildet oder weist eine Oberflächenstrukturierung auf. Die Ausbildung der Reflektionsfläche wird dabei vorteilhaft auf den gewählten Sensor bzw. das mit diesem durchführbare Messverfahren abgestimmt. Die Verwendung eines gesonderten Reflektionsmittels erlaubt die Ausrüstung des Stempels bzw. Stempelgrundes ohne direkte Modifikationen am Stempelgrund wie beispielsweise hochgenaue Bearbeitung oder Strukturierung der Grundfläche durchführen zu müssen und vereinfacht somit die Herstellung.

Wird die Reflektionsfläche bzw. das gesonderte Reflexionsmittel wie in einer vorteilhaften Weiterbildung vorgesehen, als auf dem Stempelgrund aufgebrachtes Prisma ausgebildet bietet sich vorteilhaft die Möglichkeit, neben der Längsdehnung auch die Querdehnung des Stempelgrundes zu erfassen. Zur Erfassung der Längendehnung wird das Prisma derart ausgebildet bzw. angeordnet, dass das vom Sensor ausgesendete Signal direkt zurück zum Sensor reflektiert wird, sodass die Distanzänderung wie beschrieben durch Laufzeitmessung gemessen wird. Zur Erfassung der Querausdehnung wird das Prisma derart ausgebildet bzw. angeordnet, dass das Signal seitlich umgelenkt wird und auf die innenseitige Umfangswand des Stempelgrundes bzw. der Stempelspitze trifft. Das Strahl wird von der Umfangswand zum Sensor reflektiert. Durch die Analyse der seitlichen Reflexionen können über den Sensor zusätzlich Informationen über Veränderungen der Querausdehnung der Stempelspitze aufgrund von Temperatur- und Druckeinwirkung erfasst und die abgeleiteten Werte in der rechnerischen Dehnungskompensation verarbeitet werden. Das Prisma kann hierzu beispielsweise als Winkelprisma oder Retroreflektor, der sowohl eine direkte Rückreflexion als auch eine seitliche Ablenkung ermöglicht ausgebildet werden. Bei Verwendung eines Prismas muss der Sensor entsprechend angepasst werden, um die unterschiedlichen Reflexionssignale auszuwerten.

Gemäß einer Weiterbildung weist die Reflektionsfläche oder das Reflektionsmittel den gleichen Wärmeausdehnungskoeffizienten wie die Stempelspitze auf. Da die Reflektionsfläche oder das Reflektionsmittel bei Temperaturänderung die gleiche Ausdehnung wie die Stempelspitze bzw. der Stempelgrund erfährt, kann die Position der Stempelspitze bzw. des Stempelgrundes in der Distanzmessung präzise erfasst werden. Dadurch lassen sich Positionsänderungen, die auf die thermische Ausdehnung zurückzuführen sind, zuverlässig erfassen, rechnerisch kompensieren und die Messgenauigkeit der mit der erfindungsgemäßen Prüfkammeranordnung ausgestatteten Geräte in einfacher Art und Weise verbessern. In Anwendungen wie der Kapillar-Rheometrie, bei denen häufig hohe Temperaturen auftreten, bleiben die Reflektionsfläche bzw. das Reflektionsmittel aufgrund des zur Stempelspitze identischen Wärmeausdehnungskoeffizienten formstabil. So wird die Zuverlässigkeit der Positionsmessung auch bei stark schwankenden oder hohen Temperaturen erhöht.

Gemäß einer weiteren Ausführungsform der erfindungsgemäßen Prüfkammeranordnung weist die Verschiebeeinrichtung einen Spindeltrieb auf. Ein Spindeltrieb erlaubt eine exakte Steuerung und Erfassung der Weglänge und Positionierung der Stempelspitze. Dies ist vorteilhaft für die präzise Wegemessung der Verschiebeeinrichtung, da der Spindeltrieb eine gleichmäßige Bewegung ermöglicht und damit die Genauigkeit der Positionsbestimmung im gesamten System verbessert. Spindeltriebe bieten zudem eine hohe Reproduzierbarkeit, da die Positionierung unabhängig von Belastungseinflüssen stabil bleibt und daher die präzise Positionierung der Stempelspitze auch bei unterschiedlichen Belastungen ermöglichen. Die kontinuierliche und gleichmäßige Bewegung eines Spindeltriebs ermöglicht die zuverlässige Integration in Wegmesssysteme, wie zum Beispiel Linearpotentiometer, optische oder induktive Messsysteme. So lassen sich präzise und kontinuierliche Messungen der Verschiebeposition realisieren, wodurch in Verbindung mit der erfindungsgemäßen Prüfkammeranordnung die Messgenauigkeit weiter verbessert wird. Als die Erfindung nicht beschränkende Alternativantriebe für die Verschiebeanordnung kommen beispielsweise auch hydraulische Antriebe, Linearmotoren und Piezomotoren in Frage.

Gemäß einer weiteren Ausführungsform der erfindungsgemäßen Prüfkammeranordnung ist eine außerhalb der Prüfkammer, unterhalb des Prüfkammerbodens angeordnete weitere berührungslose Distanzmessvorrichtung zur berührungslosen Erfassung einer Prüfkammerausdehnung vorgesehen, wobei dem Prüfkammerboden eine der weiteren berührungslosen Distanzmessvorrichtung zugewandte weitere Reflektionsfläche oder ein weiteres Reflektionsmittel für ein von der weiteren berührungslosen Distanzmessvorrichtung ausgesendetes Messignal zugeordnet ist und die berührungslose Distanzmessvorrichtung einen relativ zur weiteren Reflektionsfläche oder dem weiteren Reflektionsmittel beanstandet angeordneten weiteren Sensor zur berührungslosen Erfassung eines von der weiteren Reflektionsfläche oder dem weiteren Reflektionsmittel zum weiteren Sensor reflektierten Messignals aufweist. Da sich nicht nur die Stempelspitze, sondern auch die Prüfkammer und deren Boden bei Temperatur- und Druckänderungen ausdehnen, ermöglicht die zusätzliche Distanzmessvorrichtung eine genaue Erfassung der Dehnung des Prüfkammerbodens und/oder einer darin in einer vorteilhaften Weiterbildung der Prüfkammeranordnung bzw. des damit ausgestatteten Kapillar-Rheometers eingesetzten Extrusionsdüse bzw. deren Düsengrund. Diese Information kann rechnerisch mit der Dehnung der Stempelspitze kombiniert werden, sodass die Gesamtdehnung des Systems effektiv kompensiert und eine äußerst präzise Erfassung des Kontaktpunktes zwischen Stempel und Prüfmasse erreicht wird. Die berührungslose Erfassung der Prüfkammerausdehnung unterhalb des Prüfkammerbodens stellt vorteilhaft sicher, dass die Distanzmessvorrichtung selbst nicht von der Temperatur und dem Druck in der Prüfkammer beeinflusst wird. Der weitere Sensor liefert so Messdaten, die eine exakte Kompensation der thermischen Dehnungen der Prüfkammer ermöglichen. Die räumliche Trennung der Distanzmessvorrichtungen für die Stempelspitze und den Prüfkammerboden erlaubt eine unabhängige Erfassung der jeweiligen Dehnungen. Dies reduziert Messfehler, die durch direkte mechanische Interferenzen entstehen könnten, und ermöglicht eine präzise Aufschlüsselung der Ausdehnungseffekte, die dann getrennt oder kombiniert in die Berechnung bzw. die rechnerische Korrektur der Messergebnisse einfließen können. Da die Distanzmessvorrichtung kontinuierlich die Dehnung des Prüfkammerbodens oder des Düsengrundes der darin eingesetzten Extrusionsdüse erfasst, kann die thermische Ausdehnung dynamisch und in Echtzeit während des Betriebs des Rheometers erfasst und rechnerisch kompensiert werden. Dies ist besonders vorteilhaft, wenn sich die Temperaturen oder Drücke im Prüfkammerinneren während eines Prüfzyklus ändern, sodass jederzeit eine präzise Positionsbestimmung des Prüfkammerbodens oder des Düsengrundes der darin eingesetzten Extrusionsdüse bzw. von deren druck- oder temperaturabhängiger Ausdehnung gewährleistet ist.

Gemäß einer Weiterbildung weist der Sensor eine Messauflösung von zwischen 0,001 mm und 0,008 mm, bevorzugt von 0,005 mm auf. Vorteilhaft erlaubt die hohe Messauflösung des Sensors die Erfassung selbst kleinster, durch die Dehnung der Prüfkammer bzw. des Prüfkammerbodens bedingter Distanzänderungen, wodurch die Genauigkeit bei der Erfassung und Kompensation thermischer und mechanischer Verformungen signifikant erhöht wird. Die hohe Auflösung des Sensors ermöglicht zudem eine differenzierte Erfassung der Dehnungen unabhängig von äußeren Einflüssen. Dies führt zu einer genauen Ermittlung der tatsächlichen Positionsänderungen des Prüfkammerbodens, die zur dynamischen Kompensation der Gesamtdehnung beiträgt und so die Messgenauigkeit im Betrieb des Rheometers steigert.

Gemäß einer weiteren Ausführungsform ist der weitere Sensor als Laser-Distanzsensor, Radarsensor, Mikrowellensensor, LiDAR-Sensor, Ultraschallsensor oder Kombination daraus ausgebildet. Der weitere Sensor ermöglicht vorteilhaft eine berührungslose, präzise Messung der Distanz bzw. Distanzänderung zwischen der Reflektionsfläche oder dem Reflektionsmittel am Prüfkammerboden bzw. Düsengrund und dem Sensor. Dadurch wird die Dehnung des Prüfkammerbodens bzw. des Düsengrundes ohne mechanische Belastung exakt erfasst und die Genauigkeit der thermischen Dehnungskompensation verbessert. Durch die Messung können Positions- bzw. Distanzänderungen am Prüfkammerboden oder dem Düsengrund unmittelbar und ohne Verzögerung kontaktlos erfasst werden und eine dynamische Kompensation der Gesamtdehnung im Rheometerbetrieb durchgeführt werden. Bezüglich der Ausgestaltung und Vorteile der jeweiligen Sensoren wird, zur Vermeidung von Wiederholungen, vollumfänglich auf die obigen Ausführungen verweisen.

Gemäß einer weiteren Ausführungsform ist wenigstens ein Teilbereich einer dem weiteren Sensor zugewandten Oberfläche des Prüfkammerbodens und/oder des Düsengrundes als weitere Reflektionsfläche ausgebildet, wobei die weitere Reflektionsfläche als Spiegel oder Prisma ausgebildet sein kann oder eine Oberflächenstrukturierung aufweist.

Gemäß einer Weiterbildung ist die weitere Reflektionsfläche auf einem mit dem Prüfkammerboden und/oder dem Düsengrund verbundenen weiteren Reflektionsmittel vorgesehen und das Reflektionsmittel bevorzugt als Spiegel oder Prisma ausgebildet und/oder weist das weitere Reflektionsmittel eine Oberflächenstrukturierung auf.

Hinsichtlich der Vorteile und Ausführungsformen der vorgenannten Weiterbildungen wird, zur Vermeidung von Wiederholungen, vollumfänglich auf die Ausführungen im Zusammenhang mit der vorherig erstbeschriebenen Distanzmessvorrichtung verwiesen, die sich in der weiteren Distanzmessvorrichtung in gleicher Art und Weise ergeben.

Gemäß einer weiteren Ausführungsform weist die weitere Reflektionsfläche oder das weitere Reflektionsmittel den gleichen Wärmeausdehnungskoeffizienten wie die der Prüfkammerboden bzw. der Düsengrund auf. Da die weitere Reflektionsfläche oder das weitere Reflektionsmittel bei Temperaturänderung die gleiche Ausdehnung wie der Prüfkammerboden bzw. der Düsengrund erfährt, kann die Position des Prüfkammerbodens bzw. des Düsengrundes in der Distanzmessung präziser erfasst werden. Dadurch lassen sich Positionsänderungen, die auf die thermische Ausdehnung zurückzuführen sind, zuverlässig erfassen, rechnerisch kompensieren und die Messgenauigkeit der mit der erfindungsgemäßen Prüfkammeranordnung ausgestatteten Geräte in einfacher Art und Weise verbessern. In Anwendungen wie der Kapillar-Rheometrie, bei denen häufig hohe Temperaturen auftreten, bleiben die weitere Reflektionsfläche bzw. das weitere Reflektionsmittel aufgrund des zum Prüfkammerboden bzw. Düsengrund identischen Wärmeausdehnungskoeffizienten formstabil. So wird die Zuverlässigkeit der Positionsmessung auch bei stark schwankenden oder hohen Temperaturen erhöht.

Gemäß einer Weiterbildung, ist eine Aufnahme zur lagefixierten Festlegung der weiteren berührungslosen Distanzmessvorrichtung an der Prüfkammer oder am Prüfkammerboden vorgesehen. Zur lagefixierten Festlegung der Aufnahme ist insbesondere eine kraftschlüssige Verbindung der Aufnahme mit dem Prüfkammerboden oder wenigstens ein Spannmittel, bevorzugt eine Druckfeder vorgesehen. Zur Ausbildung einer kraftschlüssigen Verbindung kann die Aufnahme mit dem Prüfkammerboden oder der Prüfkammer verschraubt, verrastet oder mittels einer Steckverbindung verbunden werden, wobei hierzu in der Aufnahme und am Prüfkammerboden entsprechend korrespondierende Verbindungsmittel, beispielsweise Schraubgewinde, Rast- oder Steckaufnahmen, vorgesehen sind. Bei alternativer oder zusätzlicher Verbindung über ein Spannmittel, weist die Aufnahme bevorzugt wenigstens ein Spannmittel, insbesondere eine Druckfeder, zur lagefixierten Festlegung der Aufnahme auf. Ohne die Erfindung hierauf zu beschränken, stehen selbstverständlich alternative Spannmittel zur lagefixierten Festlegung der Aufnahme am Prüfkammerboden zur Verfügung, die im Zusammenhang mit der vorliegenden Erfindung alternativ oder ergänzend eingesetzt werden können. So kann die Festlegung über ein Elastomer- oder Gummielement, Klemm- oder Spannschrauben, mittels magnetischer Fixierung, durch Klemmringe oder -buchsen oder eine formschlüssige Halterung (z. B. durch Passstifte) erfolgen. Die Auswahl der geeigneten Spannmittel kann in Abhängigkeit von den spezifischen Gegebenheiten und Anforderungen durch das jeweilige Gerät, dass die erfindungsgemäße Prüfkammeranordnung aufweist, angepasst werden. Auch besteht die Möglichkeit verschiedene Spannmittel miteinander kombiniert einzusetzen. Die lagefixierte Festlegung der weiteren berührungslosen Distanzmessvorrichtung am Prüfkammerboden bietet den Vorteil, dass die weitere berührungslose Distanzmessvorrichtung auch bei thermischen oder mechanischen Belastungen in einer festen Position verbleibt und so eine konsistente und genaue Erfassung der Prüfkammerausdehnung ermöglicht wird.

Gemäß einer weiteren Ausführungsform weist die Aufnahme eine rohrförmige Verlängerung des Prüfkammerboden auf. Dies gewährleistet eine stabile und präzise Führung des Sensorsignals zwischen dem weiteren Sensor und der weiteren Reflektionsfläche bzw. dem weiteren Reflektionsmittel und die zuverlässige Erfassung der Prüfkammerausdehnung. Die Ausführung der Aufnahme als rohrförmige Verlängerung erlaubt zudem, dass überschüssiges Material, insbesondere bei pVT-Messungen, über die Aufnahme aus der Prüfkammer abgelassen werden kann.

Gemäß einer Weiterbildung des Kapillar-Rheometers ist der Prüfkammerboden geschlossen oder mit einer verschließbaren Extrusionsdüse versehen ausgebildet. Vorteilhaft wird hierdurch bei im Übrigen identischer Ausführung der Prüfkammer die Flexibilität für unterschiedliche Anwendungsanforderungen erhöht. Ein geschlossener Prüfkammerboden erlaubt genaue Druck- und Temperaturmessungen innerhalb der Prüfkammer, während die Extrusionsdüse den kontrollierten Austritt überschüssiger Prüfmasse zur Einstellung des Messvolumens bei pVT-Messungen ermöglicht.

Selbstverständlich sind auch Ausführungsformen des Kapillar-Rheometers mit erfindungsgemäßen Prüfkammeranordnungen, die nur im Bereich der Stempelstange bzw. des Stempels oder nur im Bereich des Prüfkammerbodens angeordneten Distanzmessvorrichtung en aufweisen, von der Erfindung umfasst.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1a: eine schematische Darstellung eines Kapillar-Rheometers gemäß eines Ausführungsbeispiels der Erfindung in Seitenansicht;
- Fig. 1b: eine schematische Darstellung des Kapillar-Rheometers des Ausführungsbeispiels aus Fig. 1a in Schnittdarstellung;
- Fig. 2: eine schematische Darstellung eines Ausschnitts der Prüfkammeranordnung gemäß eines weiteren Ausführungsbeispiels der Erfindung in Schnittdarstellung;
- Fig. 3: eine schematische Detailansicht eines Ausschnitts der Prüfkammeranordnung gemäß eines Ausführungsbeispiels der Erfindung in Schnittdarstellung;
- Fig. 4: eine schematische Detailansicht eines Ausschnitts der Prüfkammeranordnung gemäß eines Ausführungsbeispiels der Erfindung in Schnittdarstellung;
- Fig. 5: eine schematische Detailansicht eines Ausschnitts der Prüfkammeranordnung gemäß eines Ausführungsbeispiels der Erfindung in Schnittdarstellung; und
- Fig. 6: eine schematische Darstellung eines Kapillar-Rheometers gemäß eines weiteren Ausführungsbeispiels der Erfindung in Schnittdarstellung.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Gestrichelte Linien in den Figuren der Zeichnungen verdeutlichen, dass die Verbindungen zwischen den die gestrichelten Linien verbindenden Komponenten nicht zwingend physischen Kontakt miteinander haben müssen, sondern gleichermaßen drahtlos zueinander gekoppelt sein können.

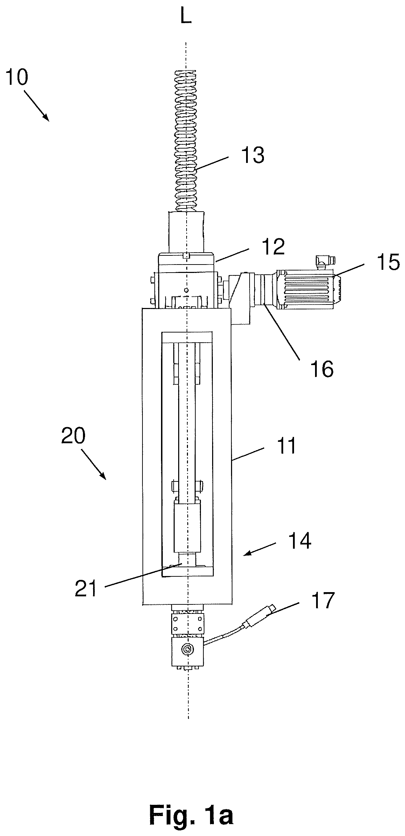

Fig. 1a zeigt in Seitenansicht eine schematische Darstellung eines Teils eines Kapillar-Rheometers 10 gemäß eines Ausführungsbeispiels der Erfindung, der die erfindungsgemäße Prüfkammeranordnung 20 enthält. Schematisch dargestellt ist ein zentrales Gehäuse 11, in dem die Hauptkomponenten des Kapillar-Rheometers 10 untergebracht sind. Das dargestellte Gerät weist eine Verschiebeinrichtung 12 auf, die mittels eines Spindelantriebes 13, einen in Fig. 1a verdeckten Stempel 14 linear entlang der Längsachse L der Vorrichtung verschiebt. Seitlich am Gerät ist ein Motor 15 angebracht, der über eine Welle 16 mit dem Spindelantrieb 13 verbunden ist, um die Linearbewegung auszuführen. Am unteren Ende des Gehäuses 11 befindet sich die erfindungsgemäße Prüfkammeranordnung 20 mit einem seitlich angeordneten Druckmesssensor 17 zur Messung der rheologischen Eigenschaften des in der Prüfkammer 21 eingebrachten und über den Stempel 14 druckbeaufschlagten Prüfmaterials. Die Prüfkammer 21 ist beheizbar ausgebildet.

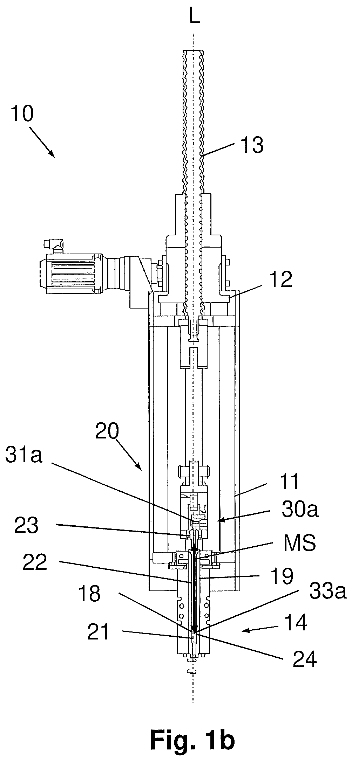

Fig. 1b zeigt eine schematische Darstellung des Teils des Kapillar-Rheometers 10 gemäß des in Fig. 1a dargestellten Ausführungsbeispiels in einer Schnittdarstellung. Die Abbildung zeigt die Prüfkammeranordnung 20 und deren Aufbau im Detail. Die Prüfkammeranordnung 20 verfügt über eine im Gerät festlegbare Prüfkammer 21, die sich in Richtung der Längsachse L erstreckt. Die Prüfkammer 21 wird mit einem zu untersuchenden Prüfmaterial befüllt, das durch Beheizung der Prüfkammer 21 verflüssigt wird. In die Prüfkammer 21 wird bei Durchführung der Messung ein Stempel 14 eingeführt. Der Stempel 14 weist eine Stempelspitze 18 auf, der auf dem Prüfmaterial aufliegt und dieses druckbeaufschlagt, sobald die Verschiebeinrichtung 12, angetrieben durch den Spindelantrieb 13, linear entlang der Längsachse L im Gerät verschoben wird. Der Stempel 14 weist eine Stempelstange 19 auf, die die Stempelspitze 18 in Richtung der Verschiebeeinrichtung 12, die auch als Stempelschlitten bezeichnet werden kann, verlängert.

Im Ausführungsbeispiel ist die Stempelstange 19 mit einer zentralen Bohrung 22 versehen, die sich vom oberen Ende 23 der Stempelstange 19, das in der Verschiebeeinrichtung 12 festgelegt ist, bis zur Stempelspitze 18 erstreckt. Die Bohrung 22 durchstößt den Stempelgrund 24 jedoch nicht, sondern endet in der Stempelspitze 18. In der Verschiebeeinrichtung 12 ist die vom oberen Ende 23 der Stempelstange 19 entkoppelte Distanzmessvorrichtung 30a angeordnet. Die Distanzmessvorrichtung 30a gibt ein Sensorsignal in die Bohrung 22 aus und umfasst einen Sensor 31a, der dazu eingerichtet ist, das von einer Reflektionsfläche 33a am Stempelgrund 24 reflektierte, durch einen Pfeil dargestellte Messsignal MS zu erfassen und den Abstand bzw. eine Abstandsänderung zwischen Sensor 31a und Reflektionsfläche 33a bei druck- oder temperaturbedingter Dehnung der Stempelspitze 18 bzw. des Stempelgrundes 24 zu erfassen und einen Messwert für die Abstandsänderung abzuleiten. Die Reflektionsfläche 33a ist unmittelbar auf dem Stempelgrund 24 angeordnet und weist die gleiche Fläche wie der Stempelgrund 24 auf. Aus den über den Sensor 31a erfassten Messwerten kann eine Dehnung des Stempels 14 bzw. des Stempelgrundes 24 während der rheologischen Messung, die auftritt, wenn der Stempel 14 temperatur- und druckbeaufschlagt wird, berührungslos erfasst werden. Die so erfassten Messwerte können zur Dehnungskompensation in der Auswertung der rheologischen Messung herangezogen werden, um die Messergebnisse entsprechend rechnerisch zu korrigieren.

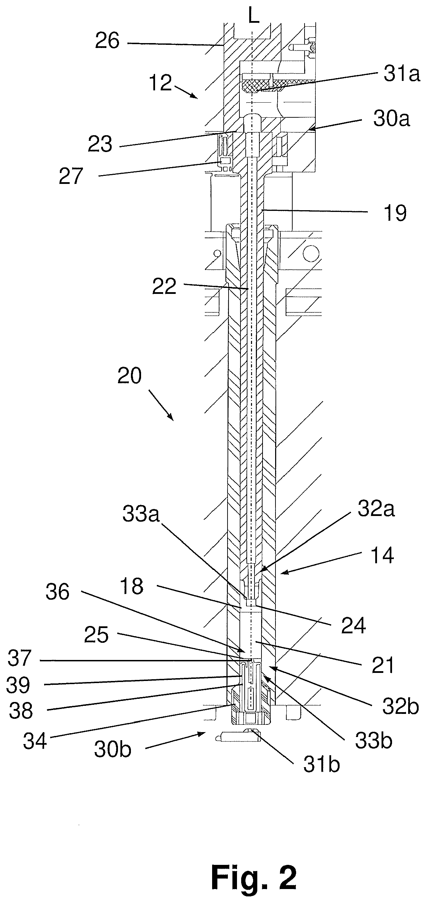

Fig. 2 zeigt eine schematische Darstellung eines Ausschnitts der Prüfkammeranordnung 20 gemäß eines weiteren Ausführungsbeispiels der Erfindung in Schnittdarstellung. In der Ausführungsform gemäß Fig. 2 ist am Stempel 14 eine Distanzmessvorrichtung 30a sowie am Prüfkammerboden 25 eine weitere Distanzmessvorrichtung 30b zur Erfassung einer temperatur- und druckbedingten Dehnung einerseits des Stempels 14 bzw. der Stempelspitze 18 und/oder des Stempelgrundes 24 und anderseits des Prüfkammerbodens 25 angeordnet. Die im Prüfkammerboden 25 eingesetzte Extrusionsdüse 36 wird bei der Durchführung einer pVT-Messung verwendet, um zur Einstellung des für die Messung benötigten Probenvolumens Material aus der Prüfkammer 21 abzulassen. Bei der eigentlichen Messung wird die Extrusionsdüse 36 und damit die Prüfkammer 21 durch eine eingesetzte Verschlussschraube 37 dicht verschlossen. Beide Distanzmessvorrichtungen 30a, verfügen im Ausführungsbeispiel über berührungslos messende Sensoren 31a, b, wie beispielsweise Laser-Distanzsensor, Radarsensor, Mikrowellensensor, LiDAR-Sensor, Ultraschallsensor oder Kombinationen daraus, die vom Stempel 14 bzw. dem Prüfkammerboden 25 entkoppelt angeordnet sind. Die Sensoren 31a, b erfassen eine Positionsänderung von im Stempel 14 oder Stempelgrund 24 bzw. am Prüfkammerboden 25 vorgesehenen Reflektionsflächen 33a, b. Die am Prüfkammerboden 25 vorgesehene Reflektionsfläche 33b umgibt die Extrusionsdüse 36 bzw. deren Düsengrund 35 ringförmig.

Die dem Stempel 14 zugeordnete Distanzmessvorrichtung 30a ist in die Verschiebeeinrichtung 12 integriert vorgesehen, während die weitere Distanzmessvorrichtung 30b am Prüfkammerboden 25 über eine die Distanzmessvorrichtung 30b tragende, im Ausführungsbeispiel mit dem Prüfkammerboden 25 verschraubte Aufnahme 34 außenseitig am Prüfkammerboden 25 festgelegt ist. Die Messung erfolgt in einem zwischen der den Prüfkammerboden 25 verlängernden rohrförmigen Aufnahme 34 und der inneren Umfangswand 39 der Aufnahme 34 ausgebildeten Ringspalt 38, der zur Führung des gesendeten und reflektierten Messsignals MS zum weiteren Sensor 31b dient. Der Ringspalt 38 wird durch den Prüfkammerboden 25, der die ringförmige Reflektionsfläche 33b zur Verfügung stellt bzw. trägt, prüfkammerseitig abgeschlossen Die Aufnahme 34 dient auch zur lagefixierten Festlegung der weiteren Distanzmessvorrichtung 30b am Prüfkammerboden 25.

Das obere Ende 23 der den Stempel 14 verlängernden Stempelstange 19 ist in einem in der Verschiebeanordnung 12 integrierten Druckstück 26 festgelegt, das über Andrückschrauben 27 vorgespannt werden kann. Um die Längenänderung des Stempels 14 in Folge von Wärmeausdehnung und Kompression durch Druckkraft erfassen zu können, ist die Stempelstange 19 entlang ihrer Längsachse L durchbohrt. In diese Bohrung 22 gibt der Sensor 31a ein in Richtung des Stempelgrundes 24 gerichtetes Messsignal MS ab das nach Reflektion an der Reflektionsfläche 33a im Stempelgrund 24 über die Bohrung 22 zum Sensor 31a zurückgeleitet und dort erfasst wird. Dabei sendet der Sensor 31a ein Messsignal MS, je nach Sensorkonfiguration beispielsweise ein Licht/Laser-, Radar/Mikrowellen- oder Ultraschallsignal, aus, das sich mit einer konstanten Geschwindigkeit bewegt und von der Reflektionsfläche 33a in der Oberfläche 32a des Stempelgrundes 24 zurück zum Sensor 31a reflektiert wird. Der Sensor 31a misst die Laufzeit des gesendeten und reflektierten Messsignals MS zwischen Stempelgrund 24 und Sensor 31a. Aus der Laufzeit und der bekannten Ausbreitungsgeschwindigkeit des Messsignals MS wird die Entfernung zur Reflektionsfläche 33a berechnet. Eine Veränderung des Abstandes zwischen Sensor 31a und Stempelgrund 24 und damit der Stempelspitze 18 aufgrund temperatur- oder druckbedingter Dehnung während der rheologischen Messung, führt zu einer Änderung der Laufzeit, die der Sensor 31a erfasst und in eine Distanzänderung umrechnet.

Die Stempelspitze 18 ist im Ausführungsbeispiel mit der Stempelstange 19 verschraubt, wobei alternativ eine Steck- oder Rastverbindung ebenfalls möglich ist. Oberhalb des oberen Endes 23 befindet sich der Sensor 31a, der im Ausführungsbeispiel höhenverstellbar in der Distanzmessvorrichtung 30a angebracht ist. Der Sensor 31a weist im Ausführungsbeispiel eine hochpräzise Ausführung mit einer Messauflösung von 0,005 mm auf. Verändert sich die Position der Stempelspitze 18 bzw. des Stempelgrundes 24, wird diese Positionsänderung relativ zur Position der Verschiebeanordnung 12, die auch als Stempelschlitten bezeichnet wird, erfasst und kann kompensiert werden.

In ähnlicher Art und Weise werden auch die Dehnungen der Prüfkammer 21, auch als Barrel bezeichnet, bzw. des Prüfkammerbodens 25 erfasst, um die Position des Prüfkammerbodens 25 bzw. des Düsengrundes 35 einer im Prüfkammerboden 25 befindlichen Extrusionsdüse 36, die auch als pVT-Düse bezeichnet werden kann, zu bestimmen. Die weitere Distanzmessvorrichtung 30b am Prüfkammerboden 25 ist mit einem weiteren Sensor 31b ausgestattet, der nach dem gleichen Messprinzip wie oben ausgeführt Distanz- bzw. Distanzänderungsmessungen vornimmt. Eine weitere, ringförmige Reflektionsfläche 33b ist hierzu auf der dem Sensor 31b zugewandten Oberfläche 32b des Prüfkammerbodens 25 vorgesehen.

Anhand der mit den beiden Distanzmessvorrichtungen 30a, b bzw. deren Wegmesssystemen erfassten Messwerte kann der Abstand zwischen der Stempelspitze 18 einerseits und dem Prüfkammerboden 25 bzw. dem Düsengrund 35 andererseits präzise ermittelt werden.

Selbstverständlich sind auch Ausführungsformen des Kapillar-Rheometers 10 mit einer erfindungsgemäßen Prüfkammeranordnung 20 möglich, die nur die im Bereich der Stempelstange 19 bzw. des Stempels 14 oder nur die im Bereich des Prüfkammerbodens 25 angeordnete Distanzmessvorrichtung 30a, b aufweisen.

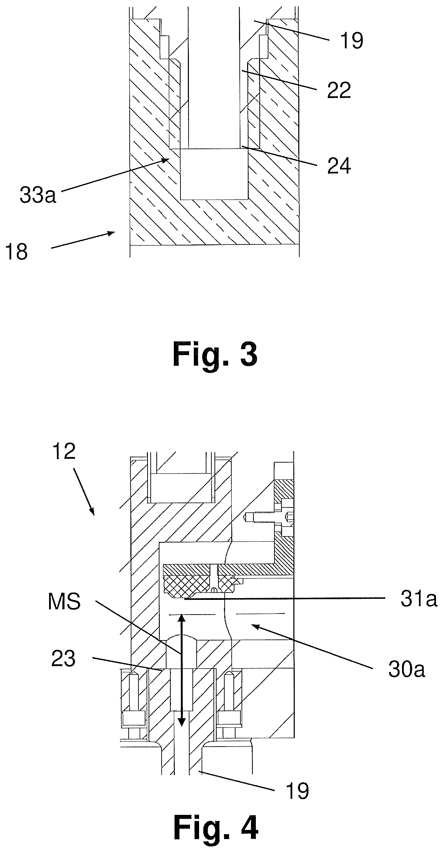

Fig. 3 zeigt eine schematische Darstellung des Stempelgrundes 24 mit der darin angeordneten Reflektionsfläche 33a, die in den Stempelgrund 24 eingesetzt ist. Die Reflektionsfläche 33a ist unterhalb einer zentralen Bohrung 22 in der Stempelstange 19 positioniert und weist den gleichen Wärmeausdehnungskoeffizienten wie die der umgebende Stempelgrund 24 bzw. die gesamte Stempelspitze 18 auf. Da sich die Reflektionsfläche 33a bei Temperaturveränderungen genauso stark ausdehnt wie die Stempelspitze 18, entspricht eine über den Sensor 31a in der Distanzmessvorrichtung 30a erfasste Abstandsänderung zwischen Sensor 31a und Reflektionsfläche 33a der Ausdehnung der Stempelspitze 18 bzw. des Stempelgrundes 24 infolge Druck- oder Temperatureinwirkung während des rheologischen Prüfvorganges.

Fig. 4 zeigt eine detaillierte Schnittdarstellung des oberen Endes 23 der Stempelstange 19, der Distanzmessvorrichtung 30a und eines Teils der Verschiebeeinrichtung 12 eines Kapillar-Rheometers 10 gemäß einem Ausführungsbeispiel der Erfindung. Am oberen Ende 23 der Stempelstange 19 ist die Distanzmessvorrichtung 30a zur Erfassung der Abstandsänderung zwischen der am unteren Ende der Bohrung 22 im Stempel 14 bzw. der Stempelstange 19 vorgesehenen Reflektionsfläche 33a und dem Sensor 31a. Die Messwerte dienen zur Dehnungskompensation bei der Auswertung der rheologischen Prüfergebnisse.

Die Distanzmessvorrichtung 30a ist mit einem Sensor 31a ausgestattet, der bei Durchführung der Messung ein in Richtung der Reflektionsfläche 33a gerichtetes Messsignal MS in die Bohrung 22 abgibt. Das Messsignal wird von der Reflektionsfläche reflektiert und vom Sensor 31a erfasst. Der Sensor 31a misst die Laufzeit des gesendeten und reflektierten Messsignals MS zwischen Stempelgrund 24 und Sensor 31a. Aus der Laufzeit und der bekannten Ausbreitungsgeschwindigkeit des Messsignals MS wird die Entfernung des Sensors 31a zur Reflektionsfläche 33a berechnet und so bei Dehnung der Stempelspitze 18 eine Distanzänderung messtechnisch erfasst. Die Distanzmessvorrichtung 30a und der Sensor 31a sind oberhalb des oberen Endes 23 der Stempelstange höhenverstellbar in Verschiebeanordnung 12 angeordnet, jedoch von der Stempelstange 19 entkoppelt. Diese erlaubt es, kleinste Positionsänderungen des Stempels 18 aufgrund thermischer Ausdehnungen oder mechanischer Belastungen messtechnisch zu erfassen und nachfolgend rechnerisch, beispielsweise bei Bestimmung des Volumens zwischen einer Düse, beispielsweise Extrusionsdüse 36 und der Stempelspitze 18, zu kompensieren.

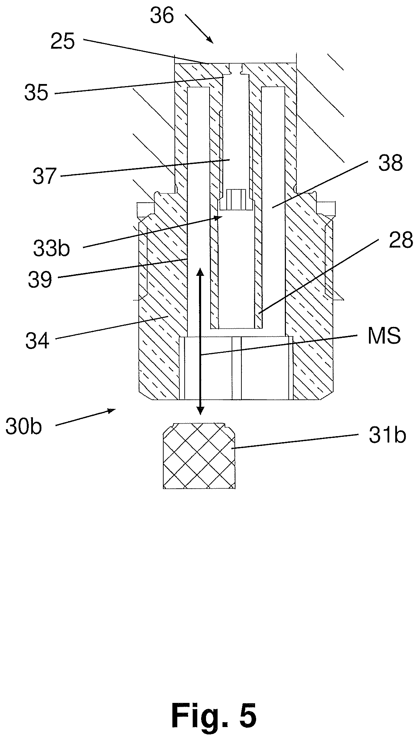

Fig. 5 zeigt eine schematische Darstellung der weiteren Distanzmessvorrichtung 30b am Prüfkammerboden 25, gemäß eines weiteren Ausführungsbeispiels der Erfindung. Die weitere Distanzmessvorrichtung 30b bzw. der darin vorgesehene weitere Sensor 31b ist im Ausführungsbeispiel am Ende einer eine rohrförmige Verlängerung 28 aufweisenden Aufnahme 34 angeordnet. Diese erstreckt sich zwischen der weiteren Distanzmessvorrichtung 30b und dem Prüfkammerboden 25. Zwischen der rohrförmigen Verlängerung 28 und der inneren Umfangswand 39 der Aufnahme 34 ist ein sich über die Länge der rohrförmige Verlängerung 28 bis zum Prüfkammerboden 25 erstreckender Ringspalt 38 ausgebildet, in den das Messsignal MS ausgesendet und von der die rohrförmige Verlängerung 28 umgebenden ringförmigen weiteren Reflektionsfläche 33b am Prüfkammerboden 25 zum weiteren Sensor 31b reflektiert wird. Der Ringspalt 38 dient dabei der Führung des vom weiteren Sensor 31b ausgesendeten Messsignal MS.

Im Ausführungsbeispiel der Fig. 5 ist die Extrusionsdüse 36 mittels einer Verschlussschraube 37 verschlossen. Für die Durchführung von pVT-Messungen wird die Verschlussschraube 37 entnommen, um Material zur Einstellung des für die Messung erforderlichen Messvolumens aus der Prüfkammer 21 abzulassen.. Nach der Einstellung des Messvolumens wird die Verschlussschraube 37 wieder eingesetzt, um die Prüfkammer 21 vollständig abzudichten. Im Ausführungsbeispiel befindet sich die weitere, ringförmig ausgebildete Reflektionsfläche 33b ebenfalls am Prüfkammerboden 25, wodurch eine möglichst proben- bzw. prüfkammernahe Messung der Dehnung des Prüfkammerbodens 25 ermöglicht wird. Der weitere Sensor 31b ist von der Aufnahme 34 entkoppelt angeordnet kann somit Abstandsänderungen zwischen dem Sensor 31b und dem Prüfkammerboden 25 erfassen, ohne selbst einer druck- oder temperaturbedingten Positionsänderung unterworfen zu sein. Die Dehnungskompensation am Prüfkammerboden 25 erfolgt nach dem gleichen Funktionsprinzip wie an der Stempelstange 19, auch wenn sich der Aufbau unterscheidet. Die die rohrförmige Verlängerung 28 aufweisende Aufnahme 34 dient gleichzeitig dazu, bei pVT-Messungen überschüssiges Material aus der Prüfkammer 21 abzulassen, wobei die rohrförmige Verlängerung 28 die Reflektionsfläche 33b vor Verunreinigungen durch das Probenmaterial schützt. Die Aufnahme 34 kann zur lagefixierten Festlegung beispielsweise mit dem Prüfkammerboden 25 bzw. der Prüfkammer 21 verschraubt werden.

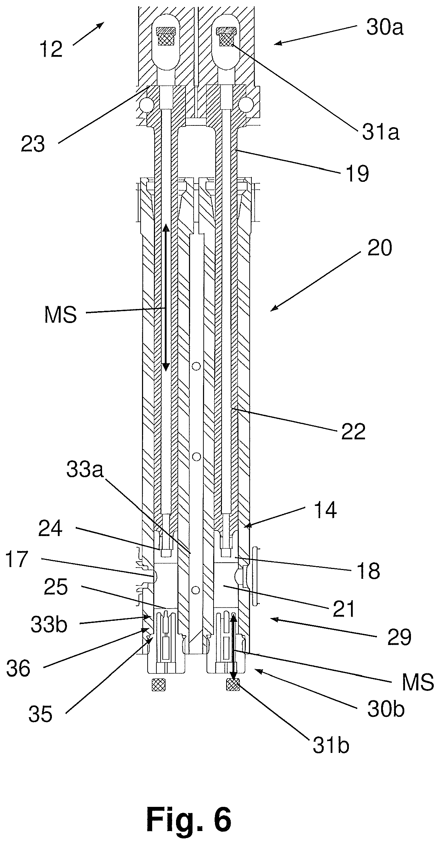

Fig. 6 zeigt eine schematische Darstellung der Prüfkammeranordnung in einem Kapillar-Rheometers 10 gemäß eines weiteren Ausführungsbeispiels der Erfindung in Schnittdarstellung. Im Ausführungsbeispiel sind zwei nebeneinander angeordneten Prüfkammeranordnungen 20 vorgesehen. Die Erfindung ist hierauf nicht beschränkt. Selbstverständlich können auch mehr als zwei der erfindungsgemäßen Prüfkammeranordnungen 20 in einem Gerät angeordnet werden, beispielsweise um den Probendurchsatz des Gerätes zu erhöhen. Die gezeigt Konfiguration ermöglicht simultane Messungen in beiden Prüfkammern 21 und die Erfassung von Dehnungen in den Prüfkammeranordnungen 20 zur Dehnungskompensation in den Ergebnissen der Prüfdurchläufe. Beide Prüfkammeranordnungen 20 sind identisch aufgebaut und verfügen jeweils über eine Stempelstange 19, die in die Prüfkammer 21 hineinragt und von oben über eine gemeinsame Verschiebeeinrichtung 12 mit einem einzigen zentralen Spindelantrieb 13 bewegt werden (vgl. Fig. 1). Die Verschiebeeinrichtung 12 kontrolliert den auf die Prüfmasse ausgeübten Druck. Der Aufbau mit zwei Prüfkammern 21 ermöglicht es, verschiedene Proben parallel zu testen oder mehrere Messreihen unter identischen Bedingungen durchzuführen, wodurch die Vergleichbarkeit der Ergebnisse verbessert wird.

Jede Prüfkammer 21 weist eine wie zuvor beschriebene Distanzmessvorrichtung 30a, b sowohl am oberen Ende 23 der Stempelstange 19 wie auch am Prüfkammerboden 25 bzw. dem Düsengrund 35 einer dort vorgesehenen Extrusionsdüse 36, zur Erfassung der temperatur- oder druckbedingten Dehnungen in der den Prüfkammern 21, auf. Erkennbar sind sowohl die die Bohrung 22 aufweisende Stempelstangen 19 wie auch die Anordnung der Distanzmessvorrichtungen 30a, b mit den jeweiligen Sensoren 31a, b.

In jeder Prüfkammer 21 sind Stempelstangen 19 eingesetzt, die von der gemeinsamen Verschiebeeinrichtung 12 angetrieben, die Stempel 14 bewegen, um über die Stempelspitzen 18 die nach Aufheizung der Prüfkammern 21 aufgeschmolzenen Prüfmassen in den jeweiligen Prüfkammern 21 kontrolliert mit Druck zu beaufschlagen. Jeder Stempelstange 19 ist eine Distanzmessvorrichtung 30a zur berührungslosen Erfassung des Abstands zwischen den Sensoren 31a und der Stempelspitze 18 bzw. dem Stempelgrund 24 zugeordnet.

Am unteren Ende 29 jeder Prüfkammer 21 sind weitere Distanzmessvorrichtungen 30b zur Erfassung der thermischen und druckbedingten Dehnung der Prüfkammerböden 25 bzw. des Düsengrundes 35 der darin angeordneten Extrusionsdüsen 36 angebracht. Die weiteren Distanzmessvorrichtung 30b umfassen ebenfalls entkoppelte Sensoren 31b. Die Sensoren 31b messen anhand der Laufzeiten der Messsignale MS die Positionsänderung der Reflektionsflächen 33b, die durch die Dehnung der Prüfkammerböden 25 und/oder des Düsengrundes 35 bewirkt wird. Die erfassten Werte dienen der Dehnungskompensation bei der Auswertung der Ergebnisse der rheologischen Materialprüfungen in den Prüfkammern 21. An den unteren Enden der Prüfkammeranordnungen 20 sind seitlich angebrachte Druckmesssensoren 17 zur Messung der rheologischen Eigenschaften der in den Prüfkammern 21 eingebrachten und über den Stempel 14 druckbeaufschlagten Prüfmaterialien angeordnet.

Selbstverständlich sind auch Ausführungsformen des Kapillar-Rheometers 10 mit den erfindungsgemäßen Prüfkammeranordnungen 20 möglich, die nur die im Bereich der Stempelstange 19 bzw. des Stempels 14 oder nur die im Bereich des Prüfkammerbodens 25 angeordneten Distanzmessvorrichtungen 30a, b aufweisen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 10: Kapillar-Rheometer
- 11: Gehäuse
- 12: Verschiebeinrichtung
- 13: Spindelantrieb
- 14: Stempel
- 15: Motor
- 16: Welle
- 17: Druckmesssensor
- 18: Stempelspitze
- 19: Stempelstange
- 20: Prüfkammeranordnung
- 21: Prüfkammer
- 22: Bohrung
- 23: oberes Ende
- 24: Stempelgrund
- 25: Prüfkammerboden
- 26: Druckstück
- 27: Andrückschraube
- 28: Verlängerung
- 29: unteres Ende
- 30a, b: Distanzmessvorrichtung
- 31a, b: Sensor
- 32a, b: Oberfläche
- 33a, b: Reflektionsfläche
- 34: Aufnahme
- 35: Düsengrund
- 36: Extrusionsdüse
- 37: Verschlussschraube
- 38: Ringspalt
- 39: innere Umfangswand
- L: Längsachse
- MS: Messsignal

## Patentansprüche

1. Prüfkammeranordnung (20), insbesondere in einem Kapillar-Rheometer (10), umfassend:
- eine mit einer Prüfmasse befüllbare, insbesondere beheizbare Prüfkammer (21) mit einem Prüfkammerboden (25);
- einen in der Prüfkammer (21) linear verschiebbar angeordneten Stempel (14) mit einer Stempelstange (19) und einer mit einem ersten Ende der Stempelstange (19) verbundenen, die Prüfmasse druckbeaufschlagenden, einen Stempelgrund (24) aufweisenden Stempelspitze (18);
- eine ein zweites Ende der Stempelstange (19) aufnehmende Verschiebeeinrichtung (12) für eine Verschiebung des Stempels (14) in der Prüfkammer (21) in Richtung des Prüfkammerbodens (25); und
- eine in der Verschiebanordnung (12) angeordnete, von dem Stempel (14) entkoppelte mit der Verschiebeanordnung (12) verschiebbare berührungslose Distanzmessvorrichtung (30a) zur Erfassung einer Stempeldehnung,
wobei in der Stempelstange (19) eine sich in Richtung einer Längsachse (L) der Stempelstange (19) zwischen dem Stempelgrund (24) und dem zweiten Ende erstreckende Bohrung (22) eingebracht ist und wobei am Stempelgrund (24) eine der berührungslosen Distanzmessvorrichtung (30a) zugewandte Reflektionsfläche (33a) für ein von der berührungslosen Distanzmessvorrichtung (30a) durch die Stempelstange (19) ausgesendetes Messignal (MS) vorgesehen ist und die berührungslose Distanzmessvorrichtung (30a) einen relativ zur Reflektionsfläche (33a) beanstandet angeordneten Sensor (31a) zur berührungslosen Erfassung des von der Reflektionsfläche (33a) zum Sensor (31a) reflektierten Messignals (MS) aufweist.

2. Prüfkammeranordnung (20) nach Anspruch 1, wobei der Sensor (31a) eine Messauflösung von zwischen 0,001 mm und 0,008 mm, bevorzugt von 0,005 mm aufweist.

3. Prüfkammeranordnung (20) nach Anspruch 1 oder 2, wobei der Sensor (31a) als Laser-Distanzsensor, Radarsensor, Mikrowellensensor, LiDAR-Sensor, Ultraschallsensor oder Kombination daraus ausgebildet ist.

4. Prüfkammeranordnung (20) nach einem der vorhergehenden Ansprüche, wobei wenigstens ein Teilbereich der dem Sensor (31a) zugewandten Oberfläche (32a) des Stempelgrundes (24) als Reflektionsfläche (33a) ausgebildet ist, wobei die Reflektionsfläche (33a) bevorzugt als Spiegel oder Prisma ausgebildet ist oder eine Oberflächenstrukturierung aufweist.

5. Prüfkammeranordnung (20) nach einem der vorhergehenden Ansprüche, wobei die Reflektionsfläche (33a) auf einem mit dem Stempelgrund (24) verbindbaren Reflektionsmittel vorgesehen ist und das Reflektionsmittel bevorzugt als Spiegel oder Prisma ausgebildet ist und/oder eine Oberflächenstrukturierung aufweist.

6. Prüfkammeranordnung (20) nach einem der vorhergehenden Ansprüche, wobei die Reflektionsfläche (33a) oder das Reflektionsmittel den gleichen Wärmeausdehnungskoeffizienten wie die Stempelspitze (18) und/oder der Stempelgrund aufweist.

7. Prüfkammeranordnung (20) nach einem der vorhergehenden Ansprüche, wobei die Verschiebeeinrichtung (12) einen Spindeltrieb (13) aufweist.

8. Prüfkammeranordnung (20) nach einem der vorhergehenden Ansprüche, wobei eine außerhalb der Prüfkammer (21) unterhalb des Prüfkammerbodens (25) angeordnete weitere berührungslose Distanzmessvorrichtung (30b) zur berührungslosen Erfassung einer Prüfkammerausdehnung, wobei dem Prüfkammerboden (25) eine der weiteren berührungslosen Distanzmessvorrichtung (30b) zugewandte weitere Reflektionsfläche (33b) oder ein weiteres Reflektionsmittel für ein von der weiteren berührungslosen Distanzmessvorrichtung (30b) ausgesendetes Messignal (MS) zugeordnet ist und die berührungslose Distanzmessvorrichtung einen relativ zur weiteren Reflektionsfläche (33b) beanstandet angeordneten weiteren Sensor (31b) zur berührungslosen Erfassung eines von der weiteren Reflektionsfläche (33b) oder dem weiteren Reflektionsmittel zum weiteren Sensor (31b) reflektierten Messignals (MS) aufweist.

9. Prüfkammeranordnung (20) nach Anspruch 8, wobei eine in dem Prüfkammerboden (25) angeordnete Extrusionsdüse (36) mit einem Düsengrund (35) vorgesehen ist und die weitere Reflektionsfläche (33b) oder ein Reflektionsmittel am oder im Düsengrund (35) vorgesehene ist.

10. Prüfkammeranordnung (1) nach Anspruch 8, wobei Sensor (31b) eine Messauflösung von zwischen 0,001 mm und 0,008 mm, bevorzugt von 0,005 mm aufweist.

11. Prüfkammeranordnung (1) nach Anspruch 8 oder 9, wobei der weitere Sensor (31b) als Laser-Distanzsensor, Radarsensor, Mikrowellensensor, LiDAR-Sensor, Ultraschallsensor oder Kombination daraus ausgebildet ist.

12. Prüfkammeranordnung (20) nach einem der Ansprüche 8 bis 11, wobei wenigstens ein Teilbereich einer dem weiteren Sensor (31b) zugewandten Oberfläche (32b) des Prüfkammerbodens (25) und/oder des Düsengrundes (35) als weitere Reflektionsfläche (33b) ausgebildet ist, wobei die weitere Reflektionsfläche (33b) als Spiegel oder Prisma ausgebildet oder eine Oberflächenstrukturierung aufweist.

13. Prüfkammeranordnung (20) nach einem der Ansprüche 8 bis 12, wobei die weitere Reflektionsfläche (33b) auf einem mit dem Prüfkammerboden (25) und/oder dem Düsengrund (35) verbindbaren weiteren Reflektionsmittel vorgesehen ist und das weitere Reflektionsmittel bevorzugt als Spiegel oder Prisma ausgebildet ist und/oder eine Oberflächenstrukturierung aufweist.

14. Prüfkammeranordnung (20) nach einem der Ansprüche 8 bis 13, wobei die weitere Reflektionsfläche (33b) oder das weitere Reflektionsmittel den gleichen Wärmeausdehnungskoeffizienten wie der Prüfkammerboden (25) und/oder der Düsengrund (35) aufweist.

15. Prüfkammeranordnung (1) nach einem der Ansprüche 8 bis 14, wobei eine Aufnahme (34) zur lagefixierten Festlegung der weiteren berührungslosen Distanzmessvorrichtung (30b) an der Prüfkammer (21) oder dem Prüfkammerboden (25) vorgesehen ist, und wobei zur lagefixierten Festlegung der Aufnahme (34) insbesondere eine kraftschlüssige Verbindung der Aufnahme (34) mit der Prüfkammer (21) oder dem Prüfkammerboden (25) oder wenigstens ein Spannmittel, bevorzugt eine Druckfeder vorgesehen ist.

16. Prüfkammeranordnung (20) nach Anspruch 15, wobei die Aufnahme eine rohrförmige Verlängerung (28) des Prüfkammerboden (25) aufweist.

17. Kapillar-Rheometer (10) mit einer Prüfkammeranordnung (20) nach einem der Ansprüche 1 bis 16.

18. Kapillar-Rheometer (10) nach Anspruch 17, wobei der Prüfkammerboden (25) geschlossen oder mit einer verschließbaren Extrusionsdüse (36) versehen ausgebildet ist.
